# EUROPÄISCHE PATENTANMELDUNG

(11) **EP 4 837 886 A1**
(43) Veröffentlichungstag der Anmeldung: **11.11.2026**
(21) Anmeldenummer: 26176441.9
(22) Anmeldetag: 05.05.2026
(51) Int. Cl.: C02F 1/42

(54) **PROZESSWASSERKONDITIONIERUNGSVORRICHTUNG FÜR EIN ELEKTROLYSESYSTEM, ELEKTROLYSESYSTEM MIT EINER PROZESSWASSERKONDITIONIERUNGSVORRICHTUNG UND BETRIEBSVERFAHREN**

(30) Priorität: 07.05.2025 DE 102025117467
(71) Anmelder: Robert Bosch GmbH, 70442 Stuttgart (DE)
(72) Erfinder: Linke, Jan Niklas, 66130 Brebach-Fechingen (DE)

(57) **Zusammenfassung**

Die Erfindung betrifft eine Prozesswasserkonditionierungsvorrichtung (01) für ein Elektrolysesystem, insbesondere ein Protonenaustauschmembran-Elektrolyse-Stack (PEM-Elektrolyse-Stack), umfassend eine Prozesswasserführung (02) zur Leitung von Prozesswasser von einem Eingang (03) zu einem Ausgang (04)
dadurch gekennzeichnet,
dass in der Prozesswasserführung (02) wenigstens zwei separate und/oder räumlich getrennte lonentauschereinrichtungen (06.1, 06.2), bevorzugt wenigstens eine Kationentauschereinrichtung (07) und eine Anionentauschereinrichtung (09), angeordnet sind, die so in der Prozesswasserführung (02) angeordnet sind, dass eine erste lonentauschereinrichtung (06.1) und eine zweite Ionentauschereinrichtung (06.2) von Prozesswasser durchfließbar sind, wobei dem Eingang (03) zugeordnet, einem Ausgang der ersten Ionentauschereinrichtung (06.1) und einem Ausgang (10) der zweiten Ionentauschereinrichtung (06.2) zugeordnet jeweils ein Leitfähigkeitssensor (05.1, 05.2, 05.3) in der Prozesswasserführung (02) angeordnet ist.

## Beschreibung

### Technisches Gebiet

Die Erfindung betrifft eine Prozesswasserkonditionierungsvorrichtung für ein Elektrolysesystem, ein Elektrolysesystem mit einer Prozesswasserkonditionierungsvorrichtung und ein Betriebsverfahren, die es ermöglicht die Prozesswasserkonditionierung effektiver, sparsamer und mit verringertem Ausschuss an Konditionierungsmitteln durchzuführen.

### Stand der Technik

Nach dem aktuellen Stand der Technik werden beim Betrieb von Elektrolysesystemen, die als Elektrolyse-Stack, bevorzugt als Protonenaustauschmembran-Elektrolyse-Stacks, kurz PEM-Elektrolyse-Stacks, ausgebildet sind, verschiedene Bestandteile, insbesondere Ionen, in das Prozesswasser eingetragen. Um die Qualität des Prozesswassers zu bestimmen wird die Leitfähigkeit des Prozesswassers gemessen und/oder überwacht. Zur Prozesswasserkonditionierung kommen im Stand der Technik bisher Ionentauscher mit Mischbettpatronen zum Einsatz, die Anionen- und Kationentauscher enthalten. Diese Mischbettpatronen haben jedoch den Nachteil, dass die Mischbettpatronen verschließen sind, wenn entweder der Anionentauscher oder der Kationentauscher - aufgrund der Erschöpfung des entsprechenden Harzes - verbraucht sind, unabhängig davon, welche Restkapazität oder Restkonditionierungsfähigkeit der jeweils andere, nicht verschlissene Ionentauscher und das dazugehörige Harz noch aufweist.

Außerdem haben die Ionentauscher mit Mischbettpatronen gemäß des Stands der Technik den Nachteil, dass die unterschiedlichen Ionentauscher, insbesondere die dazugehörigen Harze, unterschiedliche Temperaturstabilitäten oder Temperaturbeständigkeiten aufweisen, was jedoch dazu führt, dass zur Prozesswasserkonditionierung das gesamte Prozesswasser so temperiert, insbesondere gekühlt, werden muss, dass die Temperaturstabilität des jeweils empfindlicheren Harzes, regelmäßig das Harz des Anionentauschers, nicht überschritten wird. Dadurch wird verhältnismäßig viel Energie zum Kühlen und anschließenden Wärmen des Prozesswassers aufgebracht, da die Protonenaustauschmembranelektrolyse (PEM-Elektrolyse) in der Regel erst bei Temperaturen von über 60°C und dementsprechenden Temperaturen des Prozesswassers effizient durchgeführt werden kann.

### Offenbarung der Erfindung

Die Prozesswasserkonditionierungsvorrichtung für ein Elektrolysesystem mit den Merkmalen des Anspruchs 1, das Elektrolysesystem mit den Merkmalen des Anspruchs 5 und das Verfahren mit den Merkmalen des Anspruchs 7 haben den Vorteil, dass die Prozesswasserkonditionierung sich hauptsächlich denjenigen Verunreinigungen des Prozesswassers widmet, die einen stärkeren nachteiligen Einfluss auf die Effektivität und Effizienz der Elektrolyse auswirken. Gleichzeitig wird die benötigte Wärmemenge in der Prozesswasserkonditionierung gesenkt. Ferner wird die Qualität des Prozesswassers durch eine Plausibilisierung oder Bestätigung der Neutralisierung der schädlicheren Verunreinigungen des Prozesswassers ermöglicht.

Vor dem Hintergrund der vorangehenden Erläuterungen ist daher bei einer erfindungsgemäßen Prozesswasserkonditionierungsvorrichtung für ein Elektrolysesystem, insbesondere ein Protonenaustauschmembran-Elektrolyse-Stack (PEM-Elektrolyse-Stack), mit den Merkmalen des Anspruchs 1 vorgesehen, dass eine Prozesswasserführung Prozesswasser von einem Eingang zu einem Ausgang leitet. Erfindungsgemäß ist zudem vorgesehen, dass in der Prozesswasserführung wenigstens zwei separate und/oder räumlich getrennte lonentauschereinrichtungen , bevorzugt wenigstens eine Kationentauschereinrichtung und eine Anionentauschereinrichtung, angeordnet sind, die so in der Prozesswasserführung angeordnet sind, dass eine erste lonentauschereinrichtung und eine zweite Ionentauschereinrichtung von Prozesswasser durchfließbar sind, wobei dem Eingang zugeordnet, dem Ausgang zugeordnet und zwischen wenigstens zwei lonentauschereinrichtungen jeweils ein Leitfähigkeitssensor in der Prozesswasserführung angeordnet ist.

Der Eingang der Prozesswasserführung kann mit einer Elektrolysevorrichtung, bevorzugt einem Elektrolyse-Stack, besonders bevorzugt mit einem PEM-Elektrolyse-Stack fluidleitend verbunden sein. Gleiches gilt für den Ausgang der Prozesswasserführung. Das Prozesswasser wird dem Elektrolyse-Stack entnommen, durch die Prozesswasserkonditionierungsvorrichtung geleitet und am Ausgang der Prozesswasserkonditionierungsvorrichtung dem Elektrolyse-Stack wieder zugeführt.

Mit der Erfindung wird zunächst ermöglicht, dass die unterschiedlichen Ionen, nämlich Kationen und Anionen, in separaten und/oder räumlich getrennten Ionentauschereinrichtungen behandelt werden. Dies ermöglicht zunächst, dass auch die dabei zum Einsatz kommenden Kationentauscherharze und Anionentauscherharze separat und/oder alleinstehend vorgesehen werden und folglich bei Verschleiß oder Erschöpfung einzeln und separat getauscht oder erneuert werden können. Die Erfindung hat zudem in besonders vorteilhafter Weise erkannt, dass die Kationen im Prozesswasser schwerwiegendere Folgen oder Nachteile auf/für den Elektrolyseprozess haben, beispielsweise durch Versalzungsprozesse. Mit der erfindungsgemäßen Prozesswasserkonditionierungsvorrichtung wird dementsprechend die Grundlage geschaffen, dass in einer der wenigstens zwei lonentauschereinrichtungen, nämlich der Kationentauschereinrichtung möglichst alle Kationen ausgetauscht oder neutralisiert werden und die vorangehende oder nachfolgende Behandlung des Prozesswassers in einer Anionentauschereinrichtung als separate und/oder baulich getrennte Ionentauschereinrichtung im Wesentlich dazu dient, um unter Berücksichtigung der Leitwertveränderung des Prozesswassers entweder vorherzusagen wie hoch die Konzentration an potentiell schädlicheren Kationen ist oder um nachträglich zu bestätigen, dass die potentiell schädlichen Kationen bereits neutralisiert wurden und die verbleibende Restleitfähigkeit des Prozesswassers im Wesentlichen von unschädlichen oder weniger schädlichen Anionen herrührt.

Wie weiter unten noch im Detail ausgeführt werden wird, hat die Erfindung auch erkannt, dass aufgrund der vernachlässigbaren nachteiligen Wirkungen der Anionen im Prozesswasser der Anionentausch in einer Anionentauschereinrichtung im Wesentlichen der Bestätigung oder Plausibilisierung der Neutralisierung der Kationen dienen kann und folglich nicht das gesamte Prozesswasser behandelt, insbesondere einem Anionentausch, unterzogen werden muss, sondern dass je nach Betriebspunkt des Elektrolysesystems und/oder der Prozesswasserkonditionierungsvorrichtung es ausreichend sein kann, wenn ein Teil oder Bruchteil des Prozesswassers in der Anionentauschereinrichtung behandelt und die dadurch hervorgerufene Veränderung der Leitfähigkeit des Prozesswassers berücksichtigt wird.

Vorteilhafte Weiterbildungen der erfindungsgemäßen Prozesswasserkonditionierungsvorrichtung sind in den Unteransprüchen aufgeführt.

In einer besonders bevorzugten Ausgestaltung der Prozesswasserkonditionierungsvorrichtung kann vorgesehen sein, dass einer als Anionentauschereinrichtung ausgebildeten lonentauschereinrichtung eine Kühleinrichtung zur Kühlung des durch die Anionentauschereinrichtung fließenden oder geförderten Prozesswassers vorgeschaltet in der Prozesswasserführung angeordnet ist. Wie vorangehend bereits angedeutet, ermöglicht die Erfindung nicht nur die alleinstehende und separierte Verwendung von unterschiedlich temperaturbeständigen Anionentauscherharzen und Kationentauscherharze in den jeweiligen lonentauschereinrichtungen, sondern ermöglicht auch, dass die Anionentauschereinrichtung im Wesentlich als Bestätigung oder Plausibilisierung einer Restleitfähigkeit des Prozesswassers aufgrund von verbleibenden Anionen im Prozesswasser oder zur Plausibilisierung des Anteils der Leitfähigkeit des Prozesswassers dient, die zu Beginn der Prozesswasserkonditionierung auf den Anionenanteil zurückgeht. Folglich kann vorgesehen sein, dass lediglich ein Teil des Prozesswassers die Anionentauschereinrichtung passiert oder durchfließt. In diesem Zusammenhang ist es besonders vorteilhaft, wenn die Kühleinrichtung, die der Anionentauschereinrichtung vorgeschaltet ist, um das Prozesswasser auf eine Temperatur zu kühlen, die für die weniger temperaturbeständigen Anionentauscherharze geeignet ist, so in der Prozesswasserführung angeordnet ist, dass auch nur der Teil des Prozesswassers, der tatsächlich durch die Anionentauschereinrichtung fließt zuvor durch die Kühleinrichtung auf ein entsprechendes Temperaturniveau temperiert, insbesondere gekühlt wird.

In einer weiteren, vorteilhaften Ausgestaltung der Prozesswasserkonditionierungsvorrichtung kann vorgesehen sein, dass die Prozesswasserführung einen Bypass, insbesondere eine Abzweigung oder Umgehung in der Prozesswasserführung, zu der Anionentauschereinrichtung, bevorzugt zusammen mit der Kühleinrichtung, umfasst, der eine Umgehung der Anionentauschereinrichtung, und bevorzugt der Kühleinrichtung, für Prozesswasser ausbildet. Wie bereits angedeutet ermöglicht der Bypass, dass ein Teil, gegebenenfalls sogar ein Großteil des Prozesswassers nicht durch die Anionentauschereinrichtung und weiter bevorzugt ebenfalls nicht durch die Kühleinrichtung gefördert wird. Dadurch kann der Verbrauch an Anionentauscherharz reduziert werden. Weiter kann vorteilhaft erreicht werden, dass nur ein geringer Teil des Prozesswassers gekühlt werden muss. Gleichzeitig kann der Teil an Prozesswasser, der dennoch durch die Anionentauschereinrichtung geführt wird bei einem Vergleich der Leitfähigkeitswerte vor und nach Durchfluss durch die Anionentauschereinrichtung eine Grundlage für eine Bestätigung oder Plausibilisierung darstellen, wie viel weniger schädliche Anionen im Prozesswasser gelöst sind und welcher Anteil der Leitfähigkeit des Prozesswassers auf die Anwesenheit von Anionen zurückzuführen ist. Im Umkehrschluss kann daraus auch geschlossen werden, wie viele Kationen, die nach Möglichkeit vollständig neutralisiert werden müssen, im Prozesswasser zur Leitfähigkeit beitragen und auf welche Art und Weise der Kationentausch durchzuführen ist oder in welchem Zustand sich die Kationentauschereinrichtung, insbesondere das verwendete Kationentauscherharz, befindet.

In einer weiteren, vorteilhaften Ausgestaltung der Prozesswasserkonditionierungsvorrichtung kann vorgesehen sein, dass der Bypass einen Filter, ein Regelventil und/oder eine Blende, bevorzugt ein Nadelventil, umfasst. Der Filter kann beispielsweise als Harzfänger ausgebildet sein. Ein Filter im Bypass ist beispielsweise ausreichend, wenn für die Prozesswasserkonditionierungsvorrichtung und/oder das Elektrolysesystem, lediglich ein Betriebspunkt vorgesehen ist. Wenn aber mehrere oder variable Betriebspunkte gewünscht sind, kann alternativ oder zusätzlich ein Regelmechanismus, wie beispielsweise ein Regelventil, eine Blende oder ein Nadelventil im Bypass vorgesehen werden, um dann gezielt einstellen zu können, welche Menge oder welches Volumen/welcher Fluss die Anionentauschereinrichtung durchquert oder durchfließt.

Die Erfindung führt auch zu einem Elektrolysesystem mit einem prozesswasserführenden Elektrolyse-Stack, bevorzugt einem Protonenaustauschmembran-Elektrolyse-Stack, kurz PEM-Elektrolyse-Stack, wobei Prozesswasser aus dem Elektrolyse-Stack ausleitbar und einer Prozesswasserkonditionierungsvorrichtung zuleitbar ist. Erfindungsgemäß ist dabei vorgesehen, dass die Prozesswasserkonditionierungsvorrichtung nach einem der vorangehenden Ausführungsformen ausgebildet ist.

Bezüglich der Vorteile und Leistungen der Erfindung wird auf die vorangehende Beschreibung der Prozesswasserkonditionierungsvorrichtung verwiesen.

In einer vorteilhaften Ausgestaltung des Elektrolyse-Systems kann vorgesehen sein, dass der Ausgang der Prozesswasserführung der Prozesswasserkonditionierungsvorrichtung fluidleitend mit einem Prozesswassereingang des Elektrolyse-Stacks verbunden ist. Weiterhin kann vorteilhaft vorgesehen sein, dass umgekehrt auch der Eingang der Prozesswasserführung der Prozesswasserkonditionierungsvorrichtung fluidleitend mit einem Prozesswasserausgang des Elektrolyse-Stacks verbunden ist.

Die Erfindung umfasst auch ein Verfahren zum Betrieb einer Prozesswasserkonditionierungsvorrichtung für ein Elektrolysesystem, bei dem Prozesswasser entlang einer Prozesswasserführung der Prozesswasserkonditionierungsvorrichtung von einem Eingang zu einem Ausgang geleitet wird. Erfindungsgemäß ist dabei vorgesehen, dass zunächst eine Leitfähigkeit des Prozesswassers mittels eines ersten Leitfähigkeitssensors, insbesondere an einem Eingang der Prozesswasserführung, ermittelt wird. Anschließend wird Prozesswasser wenigstens zum Teil durch zwei separate und/oder räumlich getrennte lonentauschereinrichtungen, bevorzugt wenigstens eine Kationentauschereinrichtung und wenigstens eine Anionentauschereinrichtung, gefördert, die in der Prozesswasserführung angeordnet sind, wobei nach dem Durchströmen einer ersten lonentauschereinrichtung und nach dem Durchströmen einer zweiten lonentauschereinrichtung die Leitfähigkeit des Prozesswassers mit jeweils einem einem Ausgang der ersten Ionentauschereinrichtung und einem Ausgang der zweiten Ionentauschereinrichtung zugeordneten Leitfähigkeitssensor in der Prozesswasserführung ermittelt wird.

Hinsichtlich der Vorteile und Vorzüge des Betriebsverfahrens wird auf die vorangehende Beschreibung verwiesen.

In einer vorteilhaften Ausführungsform des Verfahrens kann vorgesehen sein, dass das gesamte Prozesswasser eine als Kationentauschereinrichtung ausgebildete lonentauschereinrichtung durchströmt und nur ein Teil des Prozesswassers eine als Anionentauschereinrichtung ausgebildete lonentauschereinrichtung durchströmt. Dadurch wird gleichermaßen ein effektiver und sparsamer Einsatz der Ionentauscher-Harze der lonentauschereinrichtung ermöglicht und die notwendige Wärme- oder Kälteleistung verringert. Gleichzeitig kann dadurch ermittelt oder bestätigt werden, welcher Anteil einer Leitfähigkeit des Prozesswassers auf einen Kationenanteil und auf einen Anionenanteil zurückgeht, wobei sichergestellt wird, dass der Kationenanteil möglichst vollständig entfernt oder neutralisiert wird und der Anionenanteil teilweise zurückbleibt und im Wesentlichen zur Bestätigung oder Plausibilisierung herangezogen wird.

In einer weiteren vorteilhaften Ausführungsform des Verfahrens kann vorgesehen sein, dass das Prozesswasser, welches die als Anionentauschereinrichtung ausgebildete lonentauschereinrichtung nicht durchströmt, durch einen Bypass der Prozesswasserführung strömt, über den die Anionentauschereinrichtung, und bevorzugt eine der Anionentauschereinrichtung vorgeschaltete Kühleinrichtung, umgangen wird. Der Bypass ermöglicht eine besonders einfache und effektive Umsetzung einer Ausführungsform, in der nur ein Teil des Prozesswassers die Anionentauschereinrichtung und/oder die vorgeschaltete Kühleinrichtung durchströmt.

In einer weiteren Ausgestaltung des Verfahrens kann vorteilhaft vorgesehen sein, dass anhand eines Vergleichs der mittels der Leitfähigkeitssensoren ermittelten Leitfähigkeiten des Prozesswassers die Funktion der Prozesswasserkonditionierungsvorrichtung, insbesondere die Neutralisierung eines Kationenanteils, ermittelt und/oder kontrolliert wird. Besonders bevorzugt kann eine Erschöpfung der Kationentauschereinrichtung, insbesondere des Kationentauscherharzes erkannt, vorhergesehen und ein entsprechender Austausch ermöglicht werden, um sicherzustellen, dass das Elektrolysesystem nicht nachteilig beeinflusst wird oder gar beschädigt wird.

### Kurze Beschreibung der Zeichnungen

- Fig. 1:: zeigt eine erste Ausführungsform einer erfindungsgemäßen Prozesswasserkonditionierungsvorrichtung;
- Fig. 2:: zeigt eine zweite Ausführungsform einer erfindungsgemäßen Prozesswasserkonditionierungsvorrichtung.

### Ausführungsformen der Erfindung

Gleiche Elemente bzw. Elemente mit gleicher Funktion sind in den Figuren mit den gleichen Bezugszeichen versehen.

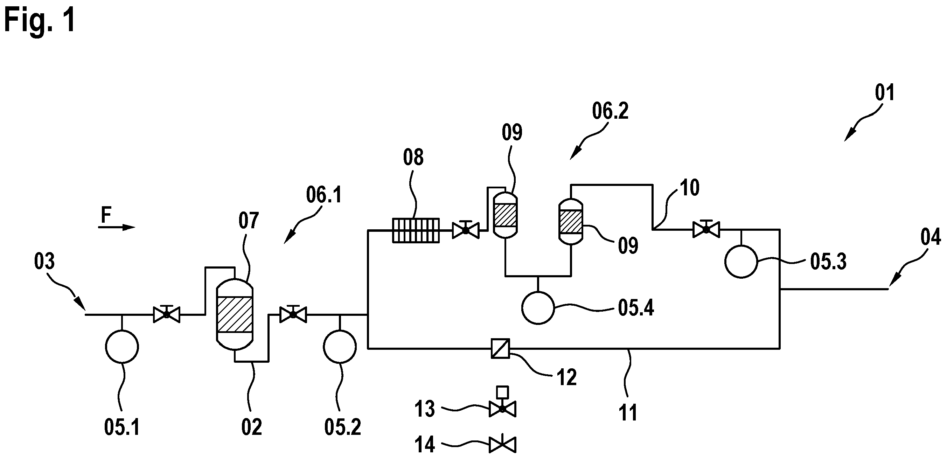

Fig. 1 zeigt eine Prozesswasserkonditionierungsvorrichtung 01 für ein Elektrolysesystem. Die Prozesswasserkonditionierungsvorrichtung 01 ist aus Gründen der Übersichtlichkeit ohne ein entsprechendes Elektrolysesystem, beispielsweise einen PEM-Elektrolyse-Stack dargestellt.

Die Prozesswasserkonditionierungsvorrichtung 01 umfasst eine Prozesswasserführung 02, die von einem Eingang 03 zu einem Ausgang 04 führt, wobei Prozesswasser entlang der Prozesswasserführung 02 geleitet oder gefördert werden kann. In einer grundsätzlichen Flussrichtung F des Prozesswassers entlang der Prozesswasserführung 02 ist nachgeordnet zu dem Eingang 03 ein erster Leitfähigkeitssensor 05.1 angeordnet, mit dem die elektrische Leitfähigkeit des Prozesswassers gemessen oder bestimmt werden kann. In Flussrichtung F dem ersten Leitfähigkeitssensor 05.1 nachgeordnet ist eine erste lonentauschereinrichtung 06.1 angeordnet, der vorteilhaft als Kationentauschereinrichtung 07 ausgebildet ist und als Verbrauchsmedium ein nicht im Detail dargestelltes Kationentauscherharz enthält.

In Flussrichtung F nach der ersten lonentauschereinrichtung 06.1 ist ein zweiter Leitfähigkeitssensor 05.2 angeordnet. Aus dem Vergleich der Leitfähigkeitswerte des ersten Leitfähigkeitssensors 05.1 und des zweiten Leitfähigkeitssensors 05.2 lässt sich bereits ermitteln wie stark die Leitfähigkeit des Prozesswassers aufgrund des Ionentauschs in der Kationentauschereinrichtung 07 abgenommen hat oder reduziert wurde. Aus den durchgeführten zwei Leitfähigkeitsmessungen lässt sich jedoch nicht ableiten, ob alle Kationen aus dem Prozesswasser entnommen oder neutralisiert wurden und in welchem Maß oder Umfang die Restleitfähigkeit auf welche Ionen, also Kationen und Anionen zurückgeht.

In Flussrichtung F nach dem zweiten Leitfähigkeitssensor 05.2 teilt sich die Prozesswasserführung 02 auf. Ein Strang der Prozesswasserführung 02 führt über eine Kühleinrichtung 08 zu einer zweiten lonentauschereinrichtung 06.2, die im Beispiel der Ausführungsform der Fig. 1 als zwei, separate und in Serie geschaltete Anionentauschereinrichtungen 09 ausgebildet sind. Die Kühleinrichtung 08 ermöglicht, dass das Prozesswasser, welches durch die Anionentauschereinrichtungen 09 gefördert wird eine Temperatur aufweist, welche geeignet ist durch die stärker temperaturempfindlichen Anionentauscherharze prozessiert zu werden.

Am Ausgang 10 der zweiten lonentauschereinrichtung 06.2 ist ein weiterer Leitfähigkeitssensor 05.3 angeordnet. Durch einen Vergleich des Leitfähigkeitswerts des Prozesswassers am zweiten Leitfähigkeitssensor 05.2 und dem ermittelten Wird des dritten Leitfähigkeitssensors 05.3 lässt sich bestätigen oder plausibilisieren, ob die verbleibende Leitfähigkeit des Prozesswassers vollständig auf Anionen zurückzuführen ist.

Durch die räumliche und/oder funktionelle Trennung der lonentauschereinrichtung 06.1 und 06.2 wird zunächst ermöglicht, dass die eingesetzten lonentauscherharze separat verwendet werden können und separat ersetzt oder aufgefüllt werden können, wenn für eines der Harze, nämlich das Kationentauscherharz oder das Anionentauscherharz, eine Erschöpfung gegeben ist oder erkannt wird. Weiterhin ermöglicht die erfindungsgemäße Prozesswasserkonditionierungsvorrichtung 01, dass nicht das gesamte Prozesswasser benötigt wird, um die Korrelation zwischen verbleibender elektrischer Leitfähigkeit des Prozesswassers nach dem Leitfähigkeitssensor 05.2 auf ihren Ursprung durch Anionen oder Kationen hin zu überprüfen. Stattdessen ist es ausreichend, wenn ein Teil des Prozesswassers in der Kühleinrichtung 08 gekühlt und anschließend in der als Anionentauschereinrichtung 09 ausgebildeten zweiten lonentauschereinrichtung 06.2 behandelt und anschließend die elektrische Leitfähigkeit gemessen wird.

Der Teil des Prozesswassers, der nicht durch die Kühleinrichtung 08 und die zweite lonentauschereinrichtung 06.2 strömt, kann über einen Bypass 11 der Prozesswasserführung 02 zum Ausgang 04 geleitet werden. Im Bypass 11 kann beispielsweise ein Filter 12, bevorzugt ein Harzfilter, ein Regelventil 13 oder eine Blende, bevorzugt ein Nadelventil 14, angeordnet sein, abhängig davon, ob die Prozesswasserkonditionierungsvorrichtung 01 mit einem festen oder variablen Betriebspunkt betrieben werden soll.

In der Ausführungsform der Fig. 1 sind zwei hintereinander angeordnete Anionentauschereinrichtungen 09 vorgesehen, zwischen denen zudem ein weiterer, vierter Leitfähigkeitssensor 05.4 vorgesehen ist. Durch diese Anordnung kann die Bestimmung oder Feststellung ob und wie viele Kationen noch im Prozesswasser zurückgeblieben sind weiter verbessert werden. Die zweite Anionentauschereinrichtung 09 und der vierte Leitfähigkeitssensor 05.4 sind aber optional und lediglich bevorzugt.

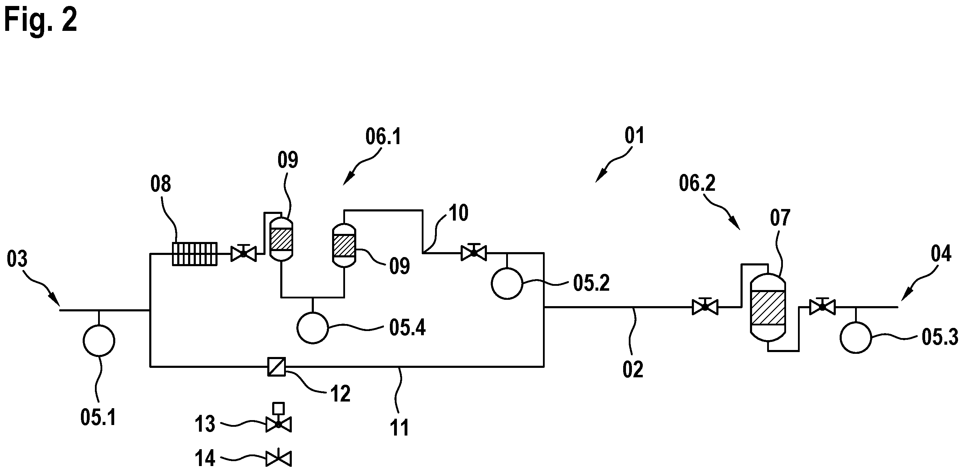

Die Ausführungsform der Fig. 2 zeigt einen alternativen Aufbau der erfindungsgemäßen Prozesswasserkonditionierungsvorrichtung 01. In der Ausführungsform der Fig. 2 ist im Wesentlichen die Reihenfolge de Kationentauschereinrichtung 07 und der Anionentauschereinrichtung(en) 09, zusammen mit der Kühleinrichtung 08 und dem Bypass 11 vertauscht. Folglich bilden die Anionentauschereinrichtungen 09 die erste Ionentauschereinrichtung 06.1 aus und die Kationentauschereinrichtung 07 bildet die zweite Ionentauschereinrichtung 06.2 aus.

Die Ausführungsform der Fig. 2 veranschaulicht, dass das Prinzip von separaten und/oder baulich getrennten lonentauschereinrichtungen 06.1, 06.2 nicht von der Reihenfolge abhängt, in denen der Ionenaustausch oder die Ionenneutralisierung stattfindet. Denn im Beispiel der Fig. 2 ist es durchaus ausreichend, wenn zu Beginn der Prozesswasserkonditionierung ein Teil des Prozesswassers durch die Anionentauschereinrichtungen 09 fließt und über die Leitfähigkeitssensoren 05.1 und 05.2, gegebenenfalls zusammen mit dem Leitfähigkeitssensor 05.4 die Leitfähigkeit gemessen und durch die Veränderung des Leitwerts ein Rückschluss ermöglicht wird, wie viel oder in welcher Konzentration weniger schädliche Anionen in dem Prozesswasser vorhanden sind oder gelöst sind. Der Vergleich des Messwerts des Leitfähigkeitssensors 05.2 und des am Ausgang der zweiten lonentauschereinrichtung 06.2 angeordneten Leitfähigkeitssensor 05.3 lässt dann ein Rückschluss zu, ob die Restleitfähigkeit, die vom Leitfähigkeitssensor 05.3 gemessen wird vollständig oder wenigstens zum größten Teil auf verbleibende Anionen im Prozesswasser zurückgeht, oder ob stattdessen auch weiterhin schädliche Kationen im Prozesswasser gelöst sind. In diesem Fall kann beispielsweise ein Ionentauscherharz in der Kationentauschereinrichtung 07 ausgetauscht, regeneriert oder erneuert werden, um anschließend den vollständigen Austausch von Kationen im Prozesswasser wieder sicherzustellen.

Das Prozesswasser kann am Ausgang der Prozesswasserkonditionierungsvorrichtung 01 einem prozesswasserführenden Elektrolyse-Stack, bevorzugt einem PEM-Elektrolyse-Stack zugeführt werden. Umgekehrt kann am Eingang 03 der Prozesswasserführung 02 Prozesswasser aus einem prozesswasserführenden Elektrolyse-Stack, bevorzugt einem PEM-Elektrolyse-Stack eingeleitet oder zugeleitet werden.

## Patentansprüche

1. Prozesswasserkonditionierungsvorrichtung (01) für ein Elektrolysesystem, insbesondere ein Protonenaustauschmembran-Elektrolyse-Stack (PEM-Elektrolyse-Stack), umfassend eine Prozesswasserführung (02) zur Leitung von Prozesswasser von einem Eingang (03) zu einem Ausgang (04) **dadurch gekennzeichnet,**
**dass** in der Prozesswasserführung (02) wenigstens zwei separate und/oder räumlich getrennte lonentauschereinrichtungen (06.1, 06.2), bevorzugt wenigstens eine Kationentauschereinrichtung (07) und eine Anionentauschereinrichtung (09), angeordnet sind, die so in der Prozesswasserführung (02) angeordnet sind, dass eine erste lonentauschereinrichtung (06.1) und eine zweite Ionentauschereinrichtung (06.2) von Prozesswasser durchfließbar sind, wobei dem Eingang (03) zugeordnet, einem Ausgang der ersten Ionentauschereinrichtung (06.1) und einem Ausgang (10) der zweiten Ionentauschereinrichtung (06.2) zugeordnet jeweils ein Leitfähigkeitssensor (05.1, 05.2, 05.3) in der Prozesswasserführung (02) angeordnet ist.

2. Prozesswasserkonditionierungsvorrichtung nach Anspruch 1,
**dadurch gekennzeichnet,**
**dass** einer als Anionentauschereinrichtung (09) ausgebildeten lonentauschereinrichtung (06.1, 06.2) eine Kühleinrichtung (08) zur Kühlung des durch die Anionentauschereinrichtung (09) fließenden oder geförderten Prozesswassers vorgeschaltet in der Prozesswasserführung (02) angeordnet ist.

3. Prozesswasserkonditionierungsvorrichtung nach Anspruch 1 oder 2,
**dadurch gekennzeichnet,**
**dass** die Prozesswasserführung (02) einen Bypass (11), insbesondere eine Abzweigung oder Umgehung in der Prozesswasserführung (02), zu der Anionentauschereinrichtung (09), bevorzugt zusammen mit der Kühleinrichtung (08), umfasst, der eine Umgehung der Anionentauschereinrichtung (09), und bevorzugt der Kühleinrichtung (08), für Prozesswasser ausbildet.

4. Prozesswasserkonditionierungsvorrichtung nach Anspruch 3,
**dadurch gekennzeichnet,**
**dass** der Bypass (11) einen Filter (12), ein Regelventil (13) und/oder eine Blende, bevorzugt ein Nadelventil (14), umfasst.

5. Elektrolysesystem mit einem prozesswasserführenden Elektrolyse-Stack, bevorzugt einem Protonenaustauschmembran-Elektrolyse-Stack (PEM-Elektrolyse-Stack), wobei Prozesswasser aus dem Elektrolyse-Stack ausleitbar und einer Prozesswasserkonditionierungsvorrichtung (01) zuleitbar ist
**dadurch gekennzeichnet,**
**dass** die Prozesswasserkonditionierungsvorrichtung (01) nach einem der Ansprüche 1 bis 4 ausgebildet ist.

6. Elektrolysesystem nach Anspruch 5,
**dadurch gekennzeichnet,**
**dass** ein Ausgang (04) der Prozesswasserführung (02) der Prozesswasserkonditionierungsvorrichtung (01) fluidleitend mit einem Prozesswassereingang des Elektrolyse-Stacks verbunden ist.

7. Verfahren zum Betrieb einer Prozesswasserkonditionierungsvorrichtung (01) für ein Elektrolysesystem, bei dem Prozesswasser entlang einer Prozesswasserführung (02) der Prozesswasserkonditionierungsvorrichtung (01) von einem Eingang (03) zu einem Ausgang (04) geleitet wird, **gekennzeichnet durch**
- Ermittlung einer Leitfähigkeit des Prozesswassers mittels eines ersten Leitfähigkeitssensors (05.1), insbesondere an einem Eingang (03) der Prozesswasserführung (02);
- Fördern des Prozesswassers, wenigstens zum Teil, **durch** zwei separate und/oder räumlich getrennte lonentauschereinrichtungen (06.1, 06.2), bevorzugt wenigstens eine Kationentauschereinrichtung (07) und wenigstens eine Anionentauschereinrichtung (09), die in der Prozesswasserführung (02) angeordnet sind, wobei nach dem Durchströmen einer ersten Ionentauschereinrichtung (06.1) und nach dem Durchströmen einer zweiten lonentauschereinrichtung (06.2) die Leitfähigkeit des Prozesswassers mit jeweils einem einem Ausgang der ersten lonentauschereinrichtung (06.1) und einer einem Ausgang der zweiten Ionentauschereinrichtung (6.2) zugeordneten Leitfähigkeitssensor (05.1, 05.2, 05.3) in der Prozesswasserführung (02) ermittelt wird.

8. Verfahrens nach Anspruch 7,
**dadurch gekennzeichnet,**
**dass** das gesamte Prozesswasser eine als Kationentauschereinrichtung (07) ausgebildete lonentauschereinrichtung (06.1, 06.2) durchströmt und nur ein Teil des Prozesswassers eine als Anionentauschereinrichtung (09) ausgebildete lonentauschereinrichtung (06.1, 06.2) durchströmt.

9. Verfahren nach Anspruch 8,
**dadurch gekennzeichnet,**
**dass** das Prozesswasser, welches die als Anionentauschereinrichtung (09) ausgebildete lonentauschereinrichtung (06.1, 06.2) nicht durchströmt, durch einen Bypass (11) der Prozesswasserführung (02) strömt, über den die Anionentauschereinrichtung (09), und bevorzugt eine der Anionentauschereinrichtung (09) vorgeschaltete Kühleinrichtung (08), umgangen wird.

10. Verfahren nach einem der Ansprüche 7 bis 9
**dadurch gekennzeichnet,**
**dass** anhand eines Vergleichs der mittels der Leitfähigkeitssensoren (05.1, 05.2, 05.3) ermittelten Leitfähigkeiten des Prozesswassers die Funktion der Prozesswasserkonditionierungsvorrichtung (01), insbesondere die Neutralisierung eines Kationenanteils, ermittelt und/oder kontrolliert wird.
